# EUROPÄISCHE PATENTSCHRIFT

(11) **EP 0 838 201 B1**
(45) Veröffentlichungstag und Bekanntmachung des Hinweises auf die Patenterteilung: **26.02.2003**
(21) Anmeldenummer: 97118543.4
(22) Anmeldetag: 24.10.1997
(51) Int. Cl.: A61C 1/00

(54) **Steuergerät zum Anschluss von zahnärztlichen, zahntechnischen oder feinwerktechnischen Behandlungsinstrumenten oder Handstücken**
Control appliance for the connection of dental, dental technical or precise mechanical treating instruments or handpieces
Appareil de contrôler pour la connexion d'instruments de traitement dentaire, de technique dentaire ou de mécanique de précision ou pièces à main

(30) Priorität: 25.10.1996 DE 19644492
(43) Veröffentlichungstag der Anmeldung: 29.04.1998
(73) Patentinhaber: KALTENBACH & VOIGT GmbH & Co., 88400 Biberach/Riss (DE)
(72) Erfinder: Knorpp, Ernst, 88299 Leutkirch (DE); Thaler, Wolfgang, 88299 Leutkirch (DE)
(74) Vertreter: Schmidt-Evers, Jürgen, Dipl.-Ing.

(56) Entgegenhaltungen:
- EP-A- 0 110 200
- DE-A- 1 541 197
- DE-A- 4 220 006
- FR-A- 2 571 606

## Beschreibung

Die Erfindung betrifft ein Steuergerät zum Anschluß von einem oder mehreren zahnärztlichen, zahntechnischen oder feinwerktechnischen Behandlungsinstrumenten oder Handstücken nach dem Oberbegriff des Patentanspruches 1.

Insbesondere in der Zahntechnik werden heute zur Bearbeitung von Werkstücken mit rotierenden Werkzeugen Motorhandstücke eingesetzt, deren Antriebssysteme auf verschiedenen physikalischen Prinzipien beruhen. Verwendet werden hauptsächlich Kollektormotoren, Drehstromasynchronmotoren und zunehmend auch bürstenlose, elektrisch kommutierte Gleichstrommotoren. Parallel dazu kommen auch rein mit Druckluft betriebene Antriebe (Luftturbinen) zum Einsatz.

Die Gründe für die Verwendung verschiedener Antriebssysteme sind vielfältig. Zum einen spielen wirtschaftliche Faktoren eine große Rolle, so sind beispielsweise Kollektormotorsysteme wegen des geringeren Steuerungsaufwandes erheblich preisgünstiger als andere Systeme.

Zum anderen bestimmt die Anwendung das verwendete Motorsystem sehr stark mit. So erfordern z.B. Fräsarbeiten an Kunststoffen oder das Bearbeiten von Modellgußteilen leistungsstarke, robuste Antriebe, die auch genügend Leistungsreserven aufweisen müssen, um sich im Betrieb nicht übermäßig zu erwärmen. Dies sind Anwendungsbeispiele für Drehstrom- oder bürstenlose Gleichstrom-Antriebe. Solche Antriebssysteme sind auch bei Schleifarbeiten wegen der mit diesen Antrieben erzielbaren hohen Drehzahlen von Vorteil. Gleichstrommotoren mit Bürsten sind dagegen drehzahlmäßig durch den Kollektor begrenzt und würden bei hohen Leistungsanforderungen einem erhöhten Verschleiß unterliegen.

Bei Edelmetall- oder Keramikarbeiten sind hingegen die preislich günstigeren und wegen des im allgemeinen geringeren Gewichtes und kleinerer Baugröße beweglicheren Kollektormotorantriebe von Vorteil. Zur Ausarbeitung von Fissuren wiederum sind Antriebe mit sehr hohen Drehzahlen erforderlich. Hier werden dann bevorzugt luftgetriebene Antriebe eingesetzt.

Diese unterschiedlichen, oben aufgeführten Faktoren führen dazu, daß in zahntechnischen Labors meist mehrere verschiedene Antriebssysteme zum Einsatz kommen.

Aufgrund des deutlichen Trends zu kleineren Laborgrößen werden zunehmend zentrale Steuereinheiten für verschiedene Motorhandstücke erforderlich. So ist beispielsweise in dem deutschen Gebrauchsmuster DE 92 18 191 U1 eine Einrichtung zur Steuerung und Stromversorgung mehrerer Verbraucher eines zahnärztlichen Behandlungsplatzes mit einer zentralen Energie-Versorgungseinheit und mit einer Steuereinheit offenbart, die einen allen Verbrauchern gemeinsamen Leistungsmodul aufweist, der in Abhängigkeit von Steuersignalen der Steuereinheit für jeden Verbraucher die passenden Versorgungsmedien zur Verfügung stellt.

Weiter ist aus der DE 42 20 006 A1 ein Steuersystem für mehrere dentale Handstücke und zugehörige Einrichtungen bekannt, welches die Zufuhr von Luft und Wasser steuert, wobei die Fluide durch einen einzigen Verteiler zugeführt werden.

Die vorgenannten sowie weitere bekannte Steuersysteme sind in der Lage, mehrere verschiedene Bearbeitungswerkzeuge oder Behandlungsinstrumente entsprechend ihrer Kenndaten und ihrer Verwendung mit den benötigten Betriebsmitteln (elektrischer Strom, Druckluft, Wasser, etc.) zu versorgen. Bei den bekannten Systemen können allerdings an ein Steuersystem nur Geräte angeschlossen und angesteuert werden, deren Antriebssysteme auf dem gleichen physikalischen Prinzip beruhen.

Sollen alle anfallenden Arbeiten von einem Techniker an einem Arbeitsplatz durchgeführt werden, so müssen nach dem heutigen Stand der Technik mehrere Steuer- und Antriebssysteme am Arbeitsplatz angebracht werden, um für alle Arbeiten den bestgeeigneten Antrieb einsetzen zu können. Da jedes Antriebssystem zudem sein eigenes Einstell- und/oder Betätigungselement hat (zumeist werden Kniesteuergeräte verwendet), ist dies sowohl aus Platz- als auch aus Handhabungsgründen nicht möglich.

In der EP-A1-0 110 200 ist ein Steuergerät der eingangs angegebenen Art beschrieben. Dieses vorbekannte Steuergerät weist mehrere Anschlußvorrichungen für mehrere Behandlungsinstrumente auf, wobei die geräteseitigen Anschlußarmaturen an einer von außen leicht zugänglichen Stelle des Steuergerätes angeordnet sind. Die Gruppe der geräteseitigen Anschlußarmaturen und die Gruppe der instrumentenseitigen Anschlußarmaturen sind jeweils baulich gleich ausgebildet und mit Hilfe von leicht lösbaren Verbindungsmitteln miteinander verbindbar, so daß die in den Anschlußarmaturen angeordneten Kupplungs- und Gegenglieder für die einzelnen Betriebsmittel in einer räumlichen Lage zueinander angeordnet sind, die nach einem die Betriebsmittel all dieser Instrumente berücksichtigenden Schema festgelegt sind, so daß die instrumentenseitigen Anschlußarmaturen in die geräteseitigen Anschlußarmaturen in beliebiger Kombination angeschlossen werden können, und daß die Anschlußarmaturen mechanisch zusammenwirkende Kodierungsmittel enthalten, die bei Anschluß einer instrumentenseitigen Anschlußarmatur an eine der geräteseitigen Anschlußarmaturen Signale an eine Auswerteelektronik geben, die dann Steuerorgane für die den betreffenden Behandlungsinstrument zugeordneten Betriebsmittel einschalten.

Es ist deshalb Aufgabe der Erfindung ein Steuergerät der eingangs genannten Art zu schaffen, das so ausgerüstet ist, daß es als Universalsteuergerät an einem Arbeitsplatz für mehrere Behandlungsinstrumente oder Handstücke, insbesondere auch unterschiedlicher Antriebssysteme, geeignet ist.

Diese Aufgabe wird durch die Merkmale des Patentanspruches 1 gelöst. Weiterbildungen und bevorzugte Ausgestaltungen der Erfindung sind Gegenstand der Unteransprüche.

In Weiterbildung der Erfindung sind die Antriebssysteme aller eingesetzten Instrumente mit den gleichen Einstell- und/oder Betätigungselementen (z.B. Knieschaltplatte, Fußschwinghebel, Potentiometer, Fußschalter) schaltbar und steuerbar.

Die Zuordnung, welches der angeschlossenen Instrumente oder Handstücke in Betrieb genommen werden soll, kann mittels verschiedener, allgemein bekannter Vorrichtungen bzw. Systeme erfolgen.

Im folgenden werden anhand der beigefügten Zeichnung verschiedene Ausführungsbeispiele eines erfindungsgemäßen Steuergerätes näher erläutert. Es zeigen:
- Fig. 1: ein Blockschaltbild zur Erklärung der Funktionsweise eines ersten Ausführungsbeispieles;
- Fig. 2: ein erstes Ausführungsbeispiel eines erfindungsgemäßen Steuergerätes in Prinzip-Darstellung;
- Fig. 3: ein Blockschaltbild zur Erklärung der Funktionsweise eines zweiten Ausführungsbeispieles;
- Fig. 4: ein zweites Ausführungsbeispiel eines erfindungsgemäßen Steuergerätes in Prinzip-Darstellung;
- Fig. 5: ein drittes Ausführungsbeispiel eines erfindungsgemäßen Steuergerätes in Prinzip-Darstellung;
- Fig. 6: das Steuergerät nach Fig. 5 in detaillierterer und abgewandelter Ausgestaltung.

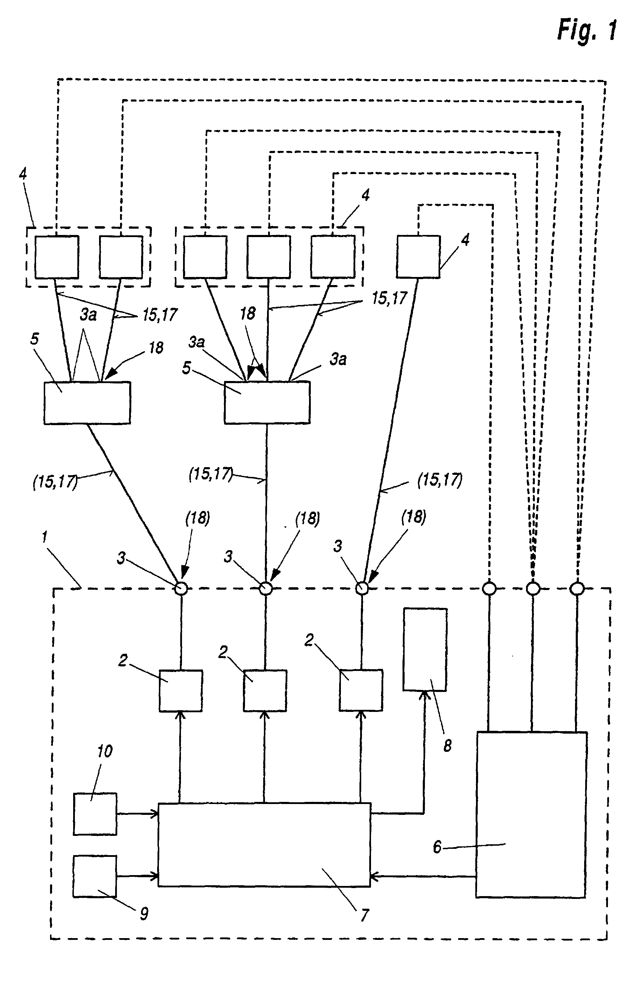

Fig. 1 zeigt ein Blockschaltbild zur Erklärung der Funktionsweise eines ersten Ausführungsbeispieles. Die Komponenten des erfindungsgemäßen Steuergerätes 1 sind innerhalb des gestrichelten Rechtecks dargestellt.

Das dargestellte Steuergerät 1 enthält drei verschiedene Versorgungseinheiten 2 für unterschiedliche Antriebssysteme, beispielsweise für Drehstrommotoren, für bürstenlose Gleichstrommotoren und für Kollektormotoren. Die Leistungsausgänge der drei Versorgungseinheiten 2 liegen an entsprechend ausgebildeten Anschlußvorrichtungen 3 an.

An die verschiedenen Anschlußvorrichtungen 3 können Behandlungsinstrumente oder Handstücke 4 mit unterschiedlichen Antriebssystemen angeschlossen werden, wobei darauf zu achten ist, daß die Instrumente oder Handstücke 4 entsprechend der von ihren Antriebssystemen benötigten Versorgung an die jeweils passende Anschlußvorrichtung 3 angeschlossen werden. Vorteilhafterweise sind die Anschlußvorrichtungen 3 je nach Versorgungseinheit 2 bzw. je nach anzusteuerndem Antriebssystem charakteristisch und unterscheidbar ausgebildet, so daß ein falsches Anschließen durch den Anwender ausgeschlossen werden kann.

Es besteht auch die Möglichkeit, mehrere Instrumente oder Handstücke 4 der gleichen Antriebsart zusammen an eine gemeinsame Anschlußvorrichtung 3 anzuschließen. In diesem Fall muß zwischen die Anschlußvorrichtung 3 und der Instrumenten- oder Handstücke-Gruppe 4 eine geeignete Verteilereinrichtung 5 als Adapter geschaltet bzw. angeordnet werden. Dabei kann die Verteilereinrichtung 5 oder können mehrere vorhandene Verteilereinrichtungen 5 an ihrer für den Anschluß der Instrumente oder Handstücke 4 vorgesehenen Seite Anschlußvorrichtungen 3a aufweisen, die der zugehörigen Anschlußvorrichtung 3 entsprechen und den wahlweisen Anschluß der Instrumente oder Handstücke 4 gewährleisten.

An Stelle der Verwendung von Verteilereinrichtungen 5 Für den Einsatz von mehreren Instrumenten oder Handstücken 4 gleicher Antriebsart kann ebenso das Steuergerät 1 um eine Anzahl von Anschlußvorrichtungen 3 erweitert werden, die von der gleichen Versorgungseinheit 2 angesteuert werden. Bei mehreren Anschlußvorrichtungen 3 für eine Versorgungseinheit 2 muß analog zur obigen Verteilereinrichtung 5 zwischen parallelen Anschlußvorrichtungen 3 und Versorgungseinheit 2 ebenfalls eine Verteilereinrichtung geschaltet bzw. angeordnet werden, die jeweils nur die eine, dem benutzten Instrument oder Handstück 4 entsprechende Anschlußvorrichtung 3 ansteuert bzw. verbindet.

Prinzipiell ist die Versorgung einer beliebigen Anzahl von verschiedenen Antriebssystemen mit einem Steuergerät 1 und eine beliebige Anzahl von Anschlußvorrichtungen 3 für jede Versorgungseinheit 2 möglich. Vorteilhafterweise wird das Steuergerät 1 zum Zwecke der einfacheren Erweiterung von Anschlußvorrichtungen 3 modulartig aufgebaut.

Um eine Zuordnung zwischen einem aus seiner Ablage entnommenen Instrument oder Handstück 4 und der entspechenden Versorgungseinheit 2 sowie (im Falle mehrerer Anschlußvorrichtungen 3 einer Versorgungseinheit 2) der entsprechenden Anschlußvorrichtungen 3 zu ermöglichen, enthält das Steuergerät 1 eine Erfassungsvorrichtung 6. Diese Erfassungsvorrichtung 6 erkennt, welches Instrument oder Handstück 4 aus seiner Ablage entnommen wurde, und gibt ein entsprechendes Signal an eine zentrale Steuereinheit 7 im Steuergerät 1 weiter.

Die Erfassungsvorrichtung 6 besteht im einfachsten Fall aus Schaltelementen direkt am Steuergerät 1 oder externen Schaltelementen an den Instrumenten oder Handstücken 4 oder den Ablagen, über die der Anwender manuell das entnommene Behandlungsinstrument oder Handstück 4 auswählt. Aus dem allgemeinen Stand der Technik sind zudem einige weitere Vorrichtungen zur automatischen Erfassung der Entnahme eines Behandlungsinstrumentes oder Handstückes 4 aus einer Ablagevorrichtung bekannt.

Als rein elektronische Erfassung kann beispielsweise jedes Behandlungsinstrument oder Handstück 4 mit einem charakteristischen Widerstandswert kodiert werden. Nach Entnahme eines Handstückes 4 aus der entsprechenden Ablagevorrichtung wird der angeschlossene Widerstandswert gemessen und aufgrund des gemessenen Widerstandswertes auf den angeschlossenen Instrumententyp geschlossen.

Eine mechanisch-elektronische Möglichkeit neben den bereits erwähnten Schaltelementen ist dadurch gegeben, daß die Instrumente oder Handstücke 4 in speziell ausgebildeten Ablagen angeordnet sind, die nur für die Aufnahme eines Typs ausgebildet sind. Bei Entnahme eines Instrumentes oder Handstückes 4 wird die spezifische Ablageadresse ermittelt und an die Steuereinheit übermittelt.

Eine weitere Variante zur Erfassung der Entnahme eines Instrumentes oder Handstückes 4 basiert auf einem opto-elektronischen Prinzip. Die Entnahme bzw. Ablage der Instrumente oder Handstücke 4 wird dabei beispielsweise über Lichtschranken detektiert, die an den Ablagen vorgesehen sind.

Als letztes sei noch die Nutzung von magnetischen Effekten genannt. Beispielsweise werden in Spulen von charakteristischer Induktivität bei Entnahme oder Ablage eines Handstückes 4 durch einen Ferritkern Induktionsströme induziert. Weiter kann auch die Entnahme eines Instrumentes aus seiner Ablage aufgrund einer Änderung bzw. Störung eines magnetischen Feldes überwacht werden. Die einzelnen Instrumente sind dabei mit einem magnetischen Instrument versehen, so daß sich der magnetische Fluß in der Ablage bei Vorhandensein der Instrumente in der Ablage von demjenigen bei der Entnahme des Instrumentes aus der Ablage unterscheidet.

Da bereits einige verschiedene Systeme mit unterschiedlichen Funktionsweisen zur Erfassung der Entnahme eines Instrumentes oder Handstückes 4 aus dem Stand der Technik bekannt sind und da ein solches Erkennungssystem an sich nicht Gegenstand der vorliegenden Erfindung ist, sei zwecks genauerer Beschreibung und weiterer Möglichkeiten an dieser Stelle nur auf die einschlägige Literatur zu diesem Thema verwiesen.

Die Erfassungsvorrichtung 6 erkennt die Ablageposition des entnommenen Instrumentes oder Handstückes 4 und somit auch die Anschlußvorrichtung 3, über die das betreffende Instrument 4 angesteuert werden kann. Diese Daten werden von der Erfassungsvorrichtung 6 an die zentrale Steuereinheit 7 übermittelt.

Die Steuereinheit 7 ermittelt auf der Grundlage der von der Erfassungsvorrichtung 6 übermittelten Daten den Typ des entnommenen Instrumentes oder Handstückes 4, d.h. insbesondere Antriebssystem und benötigte Betriebsmittel. Dies kann beispielsweise mittels geeigneter Software und einer in der Steuereinheit 7 integrierten Steuertabelle geschehen. Entsprechend diesem Ergebnis wird die entsprechende Versorgungseinheit 2 und die entsprechende Anschlußvorrichtung 3 mit den benötigten Parametern angesteuert. Im Falle von mehreren an einer Anschlußvorrichtung 3 angeschlossenen Instrumenten 4 müssen von der Steuereinheit 7 zudem Steuerdaten für die richtige Wahl des Ausganges der Verteilereinrichtung 5 übermittelt werden. Ebenso muß im Falle mehrerer an einer Versorgungseinheit 2 angeschlossener Anschlußvorrichtungen 3 durch die Steuereinheit 7 die richtige Wahl der Anschlußvorrichtung 3 gesteuert werden.

Die eingestellten Betriebsparameter und sonstige Informationen, wie zum Beispiel Gerätetyp, Anschlußvorrichtung, Antriebsart, Drehzahl, Wasserversorgung, Luftversorgung, Fehlermeldungen, Zeiten und dergleichen, des entnommenen Instruments oder Handstückes 4 können wahlweise über eine oder mehrere interne und/oder externe Anzeigevorrichtungen 8 dem Anwender angezeigt werden. Die Anzeigevorrichtungen 8 befinden sich vorzugsweise direkt am Steuergerät 1 und/oder im Blickfeld des Anwenders.

Für den Anwender besteht die Möglichkeit, über eine Eingabeeinrichtung 9 eine von ihm gewünschte Drehzahl für das entnommene Instrument oder Handstück 4 einzugeben, die durch die Steuereinheit 7 über die entsprechende Versorgungseinheit 2 eingestellt wird. Hierzu sollte in der Anzeigevorrichtung 8 zumindest ein Anzeigefeld für die Drehzahl vorgesehen sein. Besonders vorteilhaft ist auch die automatische Vorgabe einer mittleren Drehzahl durch die Steuereinheit 7 nach Erkennen des entnommenen Instrumententyps, die einer mittleren Drehzahl für eine übliche Anwendung des Instrumententyps entspricht. Ausgehend von dieser mittleren Drehzahlvorgabe durch die Steuereinheit 7 kann der Anwender bei Bedarf die Drehzahl relativ schnell auf den von ihm gewünschten Wert korrigieren.

Weiter ist die Steuereinheit 7 des Steuergerätes 1 mit einem Schalter 10 zur Inbetriebnahme des jeweiligen Instruments oder Handstückes 4 verbunden. Die Steuerdaten werden zwar ab dem Zeitpunkt der Entnahme den Versorgungseinheiten 2 und den Instrumenten oder Handstücken 4 übermittelt, aus sicherheitstechnischen Gründen werden die Instrumente oder Handstücke 4 aber erst in Betrieb genommen, wenn dies vom Anwender gewünscht wird. Andererseits wird die Inbetriebnahme der Instrumente oder Handstücke 4 von der Steuereinheit 7 gesperrt, solange sich die Instrumente oder Handstücke 4 in ihrer Ablage befinden.

Als Schalter 10 können beispielsweise Fußschalter, Fußschwinghebel, Knieschaltplatten, Potentiometer oder andere bekannte Schaltertypen verwendet werden. Es ist auch denkbar, die Funktionen Wahl der Drehzahl und Inbetriebnahme des Handstückes 4 zusammen über einen kombinierten Schalter eingeben zu können.

Über Schalter 10 und Drehzahl-Eingabeeinrichtung 9 können sämtliche angeschlossenen Instrumente oder Handstücke 4, auch unterschiedlicher Antriebssysteme, in gleicher Weise betrieben werden. Es sind also nicht mehrere Schalter 10 und/oder Eingabeeinrichtungen 9 für die Bedienung der Instrumente oder Handstücke 4 notwendig.

Neben der oben beschriebenen universellen Steuerung verschiedener Antriebssystme durch ein einziges Steuergerät 1 ist es weiter denkbar, diese Universalsteuerung mit einer Universalsteuerung verschiedener Betriebsmittel, wie Wasser oder Luft, zu kombinieren. Solche Steuergeräte sind bereits allgemein bekannt, es sei in diesem Zusammenhang beispielsweise auf die Druckschriften DE 195 08 481 A1 der Anmelderin, DE 43 38 622 A1 und DE 42 20 006 A1 verwiesen.

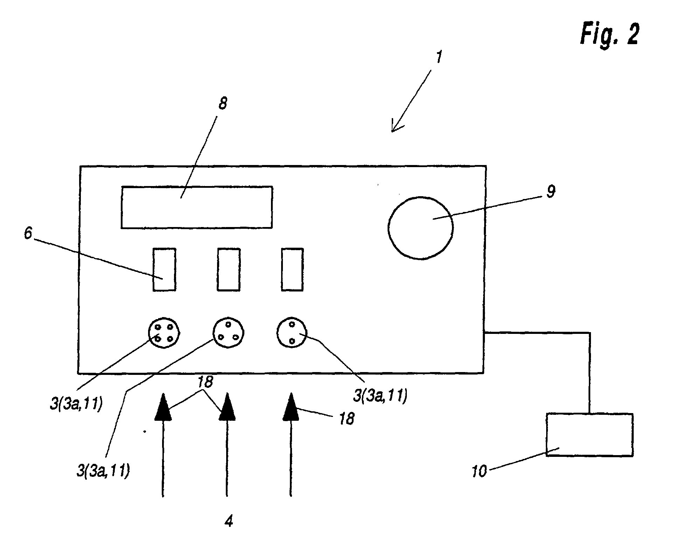

In Fig. 2 ist nun ein erstes Ausführungsbeispiel eines erfindungsgemäßen Steuergerätes 1 dargestellt. Das gezeigte Steuergerät 1 entspricht dem oben beschriebenen Blockschaltbild von Fig. 1.

Das Steuergerät 1 besitzt drei elektrische Anschlußvorrichtungen 3 zum Anschluß dreier verschiedener elektrischer Antriebssysteme. An Stelle von oder zusätzlich zu den elektrischen Anschlußvorrichtungen 3 können natürlich auch pneumatische Anschlußvorrichtungen am Steuergerät 1 angebracht sein. Als Erfassungsvorrichtung zur Auswahl des gewünschten Instruments oder Handstückes 4 sind über den Anschlußvorrichtungen 3 Schalter 6 angebracht, die zur Anzeige des ausgewählten Instruments 4 zusätzlich mit Leuchtdioden hinterlegt sein können.

Zusätzlich weist das Steuergerät eine Anzeigevorrichtung 8 in Form einer LCD-Anzeige, einen Drehknopf als Drehzahl-Eingabeeinrichtung 9 und einen Schalter 10 zur Inbetriebnahme des Instruments oder Handstückes 4 auf. Zusätzlich zur LCD-Anzeige 8 direkt am Steuergerät 1 ist über eine entsprechende Anschlußvorrichtung eine externe Anzeigevorrichtung anschließbar (nicht gezeigt).

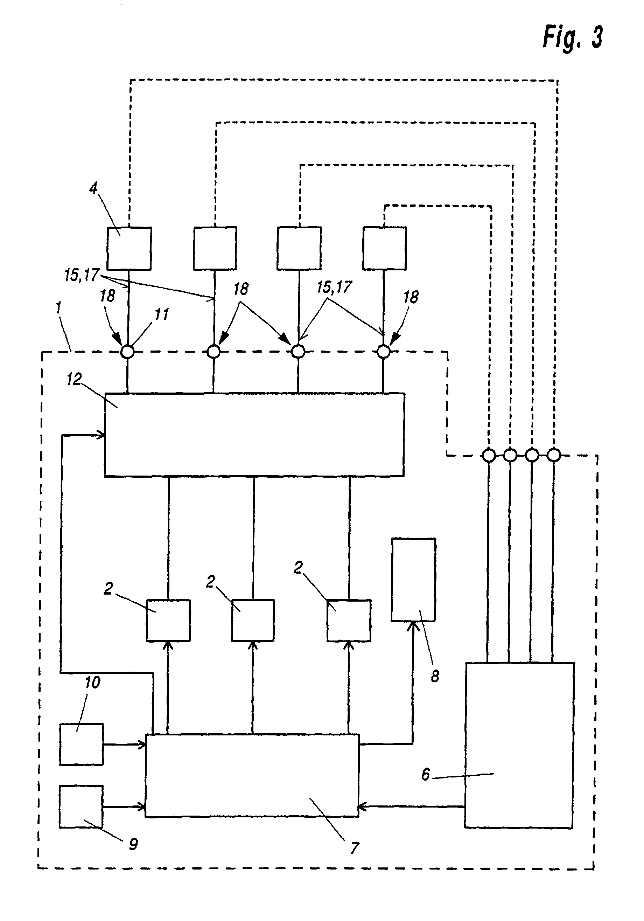

Die Funktionsweise eines zweiten Ausführungsbeispieles eines erfindungsgemäßen Steuergerätes 1 wird im folgenden anhand des Blockschaltbildes von Fig. 3 erklärt. Gleiche Einrichtungen sind dabei mit den gleichen Bezugszeichen von Fig. 1 versehen und deren Funktionen werden der Einfachheit halber nicht nochmals erklärt.

In Übereinstimmung mit dem Steuergerät von Fig. 1 zeigt Fig. 3 ein Steuergerät 1 mit einer zentralen Steuereinheit 7, die drei Versorgungseinheiten 2 für unterschiedliche Antriebssysteme ansteuert, einer Erfassungsvorrichtung 6 zum Erkennen, welches Instrument oder Handstück 4 aus seiner Ablage entnommen wurde, mindestens einer Anzeigevorrichtung 8, einer Drehzahl-Eingabeeinrichtung 9 und einem Schalter 10 zur Inbetriebnahme des jeweiligen Instruments oder Handstückes 4.

Im Gegensatz zum Steuergerät des ersten Ausführungsbeispieles weist dieses Steuergerät mehrere, z.B. vier, universelle Anschlußvorrichtungen 11 auf, an die über Universal-Verbindungselemente Instrumente oder Handstücke 4 beliebiger elektrischer Antriebssysteme anschließbar sind. Analog zum obigen ersten Ausführungsbeispiel können auch hier über (nicht gezeigte) Verteilereinrichtungen 5 mehrere Instrumente oder Handstücke 4 an eine Anschlußvorrichtung 11 anschließbar sein, oder das Steuergerät 1 kann um eine Anzahl von universellen Anschlußvorrichtungen 11 erweitert werden.

Der Vorteil der universellen Anschlußvorrichtungen 11 gegenüber den spezifischen Anschlußvorrichtungen 3 für den Anwender liegt auf der Hand. Zum einen kann jedes beliebige Instrument oder Handstück 4 an jede Anschlußvorrichtung 11 angeschlossen werden, und zum anderen kann die Anzahl der vorhandenen Anschlußvorrichtungen 11 immer optimal ausgenutzt werden. Im Falle der spezifischen Anschlußvorrichtungen 3 kann es passieren, daß eine Erweiterung des Steuergerätes 1 oder die Verwendung von Verteilereinrichtungen 5 nötig wird, obwohl noch nicht alle vorhandenen Anschlußvorrichtungen 3 belegt sind, da beispielsweise für ein Antriebssystem keine Instrumente oder Handstücke benötigt werden.

Um jede der universellen Anschlußvorrichtungen 11 mit jeder Versorgungseinheit 2 für die unterschiedlichen Antriebssysteme zu verbinden, muß zwischen die Versorgungseinheiten 2 und die Anschlußvorrichtungen 11 eine Steuereinheit 12 geschaltet werden. Die Steuereinheit 12 ermöglicht alle möglichen Ansteuerverbindungen zwischen den drei Versorgungseinheiten 2 und den vier Anschlußvorrichtungen 11 und schaltet entsprechend einem Steuersignal von der zentralen Steuereinheit 7 jeweils die benötigte Verbindung durch.

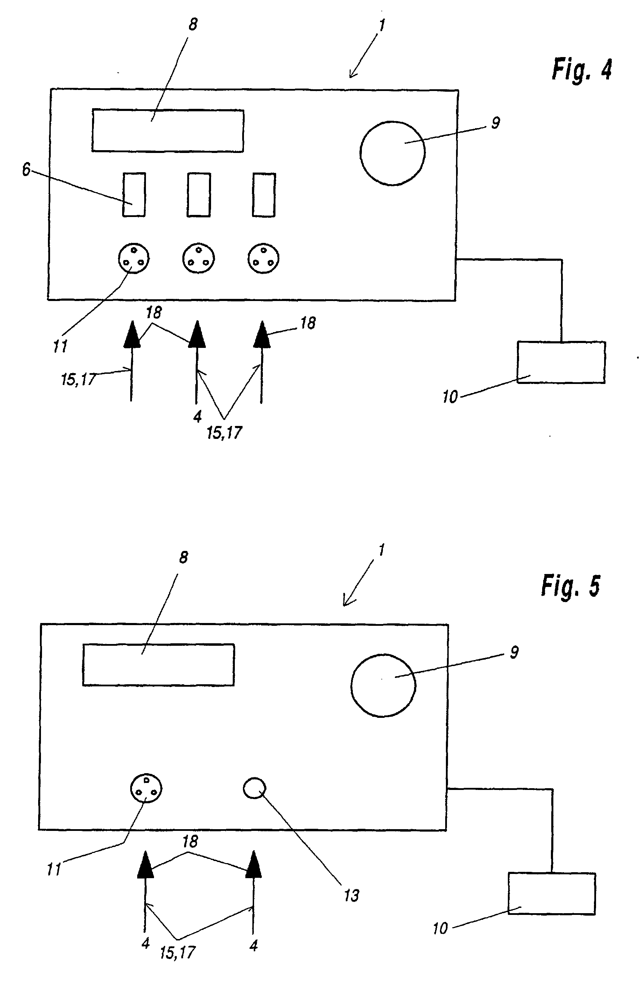

Ein der Funktionsweise des Blockschaltbildes von Fig. 3 entsprechendes Ausführungsbeispiel eines Steuergerätes 1 ist in Fig. 4 dargestellt. Vom äußeren Aufbau her entspricht dieses Steuergerät 1 im wesentlichen dem ersten Ausführungsbeispiel. In diesem Ausführungsbeispiel sind allerdings die drei Anschlußvorrichtungen als universelle Anschlußvorrichtungen 11 für den Anschluß von Instrumenten oder Handstücken 4 beliebiger Antriebssysteme ausgebildet.

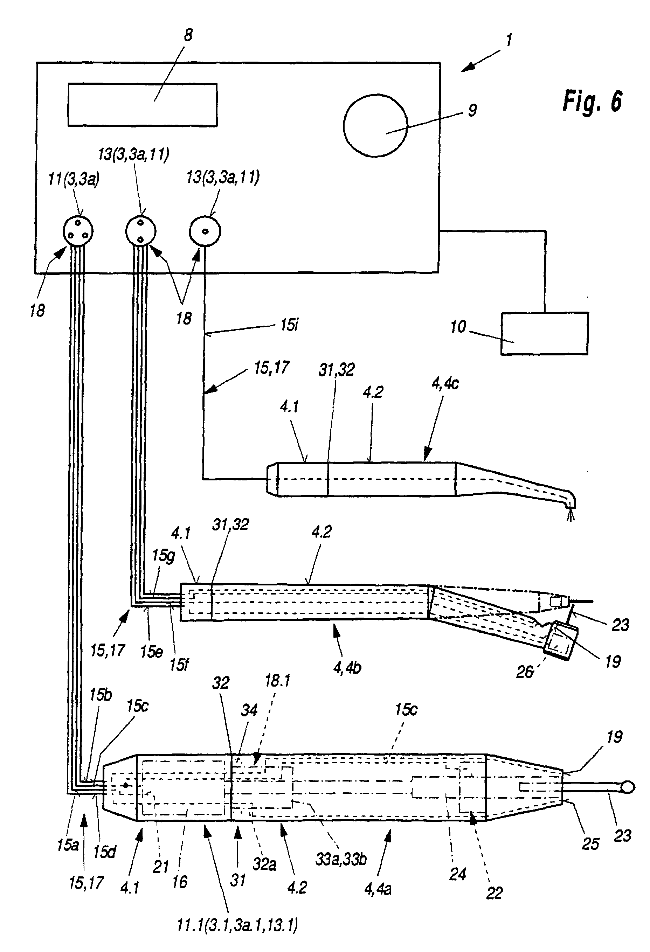

In Fig. 5 ist in analoger Darstellungsweise ein drittes Ausführungsbeispiel eines erfindungsgemäßen Steuergerätes 1 gezeigt. Das Steuergerät 1 dieses Ausführungsbeispieles kombiniert die Funktionsweisen der ersten beiden Ausführungsbeispiele, d.h. seine Funktionsweise entspricht einer Kombination der beiden Blockschaltbilder von Fig. 1 und Fig. 3.

Neben einer universellen Anschlußvorrichtung 11, die selbstverständlich um weitere Anschlußvorrichtungen 11 erweitert werden kann, ist am Steuergerät 1 eine pneumatische Anschlußvorrichtung 13 angebracht. An diese Anschlußvorrichtung 13 sind Instrumente oder Handstücke 4 mit pneumatischen Antriebssystemen, wie beispielsweise Luftturbinen, anschließbar.

Auch die Anschlußvorrichtung 13 ist natürlich um weitere pneumatische Anschlußvorrichtungen 13 erweiterbar, um mit dem Steuergerät 1 mehrere druckluftbetriebene Instrumente oder Handstücke 4 gleichzeitig anschließen und ansteuern zu können. Ebenso sind eine oder mehrere (nicht gezeigte) Verteilereinrichtungen zum Anschluß mehrerer Instrumente oder Handstücke 4 an eine Anschlußvorrichtung 13 denkbar. Die Verteilereinrichtung entspricht der oben erläuterten elektrischen Verteilereinrichtung 5 nur daß an Stelle von elektrischen Leitungen und Schaltern natürlich Druckluftleitungen und -schalter verwendet werden müssen.

Eine Zusammenlegung der beiden Anschlußvorrichtungen 3 bzw. 11 und 13 auf nur eine einzige universelle Anschlußvorrichtung ist aufgrund der Komplexität der artfremden Zuleitungen und Ansteuerungen offensichtlich nicht sinnvoll, da der nötige Aufwand den Nutzen für den Anwender übersteigt.

Wie bereits beschrieben, sind den Instrumenten oder Handstücken 4 eine oder mehrere Zuführungsleitungen 15 für durch die Betriebsmittel gebildeten Medien zugeordnet, die im Funktionsbetrieb zum Antrieb und zum Kühlen des Handstücks und /oder zum Kühlen und/oder zum Spülen und/oder Reinigen und/oder Beleuchten der Behandlungsstelle benutzt werden. Hierbei handelt es sich um elektrische Leitungen, die der Zuführung von elektrischem Strom dienen oder insbesondere flexible Rohrleitungen, die der Zuführung von Luft oder Wasser oder einem Wasser/Luftgemisch (Spray) dienen. Dabei können verschiedene Medienleitungen 15, z B. elektrische Leitungen oder eine Mediumleitung für die Antriebsluft eines als Turbine ausgebildeten Instruments oder Handstücks 4, im Kreislauf, d.h. mit einer Rückführungsleitung ausgebildet sein.

Beim Ausführungsbeispiel gemäß Fig. 6, bei dem gleiche oder vergleichbare Teile mit gleichen Bezugszeichen versehen sind, sind drei unterschiedliche Behandlungsinstrumente oder Handstücke 4 beispielhaft vorgesehen, nämlich ein sogenanntes Motorhandstück 4a mit einem elektrischen Antriebsmotor 16 im hinteren Bereich, eine als gerades oder abgewinkeltes Instrument oder Handstück 4 ausgebildete Turbine 4b und eine Handluftdüse 4c, die jeweils durch eine die zugehörigen Medienleitungen 15 umhüllende sogenannte flexible Versorgungsleitung 17 und eine zugehörige Anschlußvorrichtung 3 und/oder 3a und/oder 11 und/oder 13 mit dem Steuergerät 1 verbunden, vorzugsweise mittels einer Schnellkupplung lösbar verbunden sind. Für den Anschluß ist jeweils ein nur allgemein dargestelltes Kupplungsteil 18 am dem Steuergerät zugewandten Ende der Versorgungsleitung 17 vorgesehen, das zur zugehörigen Anschlußvorrichtung 3 bzw. 3a oder 11 oder 13 paßt. Bei den vorbeschriebenen und in Fig. 1 dargestellten Ausführungsbeispielen kann dabei die Versorgungsleitung 17 jeweils direkt mit der zugehörigen Anschlußvorrichtung 3, 11 oder 13 verbunden sein oder beim Vorhandensein von Verteilereinrichtungen 5 mit der an der zugehörigen Verteilereinrichtung 5 vorhandenen entsprechenden Anschlußvorrichtung, siehe z.B. 3a, verbunden sein. Auch bei diesem Ausführungsbeispiel können jeweils ein oder mehrere Anschlußvorrichtungen im Sinne der nicht universellen Anschlußvorrichtungen 3 bzw. 3a oder der universellen Anschlußvorrichtungen 11 vorgesehen sein, um auch mehrere Behandlungsinstrumente oder Handstücke 4 ohne und mit Verteilervorrichtungen anschließen zu können. Für ein Behandlungsinstrument oder Handstück 4 einfacher Funktion, wie es bei der Lufthanddüse 4c der Fall sein kann, kann auch eine besondere einfache Anschlußvorrichtung vorgesehen sein.

Bei den Ausführungsbeispielen gem. Fig. 6 sind für das Motorhandstück 4a eine sich zum Antriebsmotor 16 erstreckende erste elektrische Leitung 15a für Antriebsstrom, eine sich zu einer am vorderen Ende des Motorhandstücks 4a angeordnete Beleuchtungseinrichtung 19 erstreckende zweite elektrische Leitung 15b und eine oder mehrere Luftleitungen, die sich jeweils separat oder als Leitungszweige zu einer Luft-Kühlvorrichtung 21 für den Antriebsmotor 16, zu einem mittels Druckluft unterstütztem Drehlager 22 für eine ein Bearbeitungswerkzeug 23 haltende Antriebswelle 24 des Motorhandstücks 4a und zu einer im vorderen Endbereich des Motorhandstücks 4a angeordneten Luftdüse 25 erstrecken. Beim vorliegenden Ausführungsbeispiel sind zwei Luftleitungen 15c, 15d vorgesehen, von denen die mit 15c bezeichnete zur Kühlvorrichtung 21 und zum Drehlager 22 hin verzweigt und die mit 15d bezeichnete sich zur Luftdüse 25 erstreckt. Es ist möglich und je nach Verwendungszweck auch vorteilhaft, zusätzlich eine nicht dargestellte Wasserleitung vorzusehen, die sich zu einer im vorderen Endbereich des Motorhandstücks 4a angeordnete Wasserdüse erstreckt, die mit der Luftdüse 25 kombiniert sein kann.

Für das Turbinenhandstück 4b sind eine Antriebsluftleitung 15e vorgesehen, die sich zu einer im vorderen Endbereich des Turbinenhandstücks 4b angeordneten Turbine 26 für einen Drehantrieb eines Bearbeitungswerkzeugs 23 erstreckt, eine elektrische Leitung 15f, die sich zu einer im vorderen Endbereich des Turbinenhandstücks 4b erstreckende Beleuchtungseinrichtung 19 erstreckt, eine Blasluftleitung 15g, und eine Wasserleitung 15h, die sich jeweils zu einem Luft- bzw. Wasser- oder Sprayaustritt ebenfalls im vorderen Endbereich des Turbinenhandstücks 4b erstrecken.

Für die Luft-Handdüse 4c kann in der zugehörigen Versorgungsleitung 17 lediglich eine Luftleitung 15i angeordnet sein.

Jede Medienleitung 15 weist im Bereich der jeweils durch die Anschlußvorrichtung 3 bzw. 3a oder 11 gebildeten, vorzugsweise als Steckkupplung ausgebildeten, Kupplung ein Paar Verbindungselemente bzw. Kupplungselemente zum Verbinden bzw. Kuppeln der zugehörigen Medienleitung 15 auf, die beim Kuppeln bzw. Entkuppeln mit dem Kupplungsteil 18 selbsttätig miteinander verbunden oder gelöst werden und jeweils als Schnell- oder vorzugsweise Steckkupplung ausgebildet sine. Im Falle einer als flexible Rohrleitung ausgebildeten Medienleitung 15 ist dem der zugehörigen Anschlußvorrichtung 3 bzw. 3a oder 11 zugeordneten Kupplungsteil ein Verschlußelement, vorzugsweise ein in Richtung auf das Kupplungsteil 18 selbsttätig schließendes Rückschlagventil vorgesehen, das beim Kuppeln selbsttätig öffnet und beim Entkuppeln selbsttäig schließt.

Im Rahmen der Erfindung ist es möglich und zwecks einfacherer Handhabung auch vorteilhaft, die Anschlußvorrichtungen 3, 3a, 11 und/oder 13 nicht am Steuergerät 1 sondern vorzugsweise im hinteren Bereich des oder der Behandlungsinstrumente oder Handstücke 4, insbesondere zwischen einem hinteren Anschlußteil 4.1 und einem vorderen Instrumententeil 4.2 anzuordnen, bei dem es sich z. B. um ein Handstück 4 handeln kann.

Eine solche Ausgestaltung wird im folgenden anhand des Behandlungsinstruments oder Handstücks 4a in Fig. 6 erklärt.

Das hintere Anschlußteil 4.1 und das vordere Instrumententeil 4.2 sind durch eine Schnellkupplung, insbesondere in Form einer Steckkupplung oder Steck/Drehkupplung 31 miteinander verbindbar und in Fig. 6 in der verbundenen Position dargestellt. Die z. B. radial verlaufende Teilungsfuge zwischen dem hinteren Anschlußteil 4.1 und dem vorderen Instrumententeil 4.2 ist mit 32 bezeichnet. Bei der vorliegenden Ausgestaltung umfaßt die Steck/Drehkupplung 31 einen axialen zylindrischen oder stufenzylindrischen Kupplungszapfen 33a, der mit geringem Bewegungsspiel drehbar in ein Kupplungsloch 33b einsteckbar ist. Der Kupplungszapfen 33a kann vom vorderen Instrumententeil 4.2 nach hinten ragen oder vom hinteren Anschlußteil 34.1 nach vorne ragen, wie es dargestellt ist. Das Kupplungsloch 33b ist jeweils im anderen der vorgenannten Teile vorhanden. Zur Sicherung der Steck/Drehkupplung 31 in der zusammengesteckten Kupplungsstellung ist eine zwischen dem Kupplungszapfen 33a und dem Kupplungsloch 33b wirksame Verrastungsvorrichtung 34 vorgesehen, die manuell durch eine angemessene Zugkraft überdrückbar und somit handhabungsfreundlich lösbar ist. Die Medienleitungen, hier 15b bis 15d, durchsetzen die Steck/Drehkupplung 31, wobei sie die hohlzylindrische Teilungsfuge 32a zwischen dem Kupplungszpafen 33a und dem Kupplungsloch 33b Z-förmig abgedichtet durchsetzen. Im Bereich des Durchtritts durch die hohlzylindrische Teilungsfuge 32a sind in der Mantelfläche des Kupplungszapfens 33a oder in der Innenmantelfläche des Kupplungsloches 33b zu beiden Seiten mittels Dichtungsringen abgedichtete Ringnuten (nicht dargestellt) angeordnet, die den Durchgang der rohrleitungsförmigen Medienleitungen bei einer wahlweisen Drehung eines der beiden Kupplungsteile um die Achse der Steck/Drehkupplung 31 gewährleisten. Bei elektrischen Medienleitungen läßt sich die Teilungsfuge 32 oder 32a durch Schleifringkontakte überbrücken.Auch die Verrastungsvorrichtung 31 weist ein Verrastungsteil auf, das in eine Ringnut einfaßt. Eine solche Steck/Drehkupplung ist an sich bekannt und braucht deshalb im einzelnen nicht weiter beschrieben zu werden.

Wesentlich ist, daß dem vorderen Instrumententeil 4.2 zugehörige Kupplungsteil 18.1 und das dem hinteren Anschlußteil 4.1 zugehörige Kupplungsteil prinzipiell entsprechend den Anschlußvorrichtungen 3, 3a, 11 oder 13 ausgebildet ist. Um dies zu verdeutlichen, sind die vorgenannten Anschlußvorrichtungen im Unterschied zu den geräteseitigen Anschlußvorrichtungen mit der gleichen, jedoch jeweils um .1 ergänzten Positionszahlen verdeutlicht, nämlich mit 3.1, 3a.1, 11.1 und 13.1. Diese Ausgestaltung ist unter anderem deshalb vorteilhaft, weil das oder die Behandlungsinstrumente oder Handstücke 4 ohne die Versorgungsleitungen 17 angeschlossen werden können, wobei die Versorgungsleitungen 17 am Steuergerät 1 verbleiben können. Bei dieser Ausgestaltung brauchen deshalb im Anschlußbereich der Versorgungsleitungen 17 am Gerät 1 keine erfindungsgemäßen Anschlußvorrichtungen 3, 3a, 11 oder 13 angeordnet zu sein. Hier reichen ganz normale, den Durchgang der Medien gewährleistende Anschlußvorrichtungen. Bei einer instrumentenseitigen Anordnung der erfindungsgemäßen Anschlußvorrichtungen bedarf es beim Vorhandensein einer spezifischen Anschlußvorrichtung 3.1, 3a.1, prinzipiell entsprechend der vorbeschriebenen Anschlußvorrichtung 3 bzw. 3a, des Vorhandenseins der spezifischen Medienleitungen in der mit dem hinteren Anschlußteil 4.1 verbundenen Versorgungsleitung 17 und beim Vorhandensein einer universellen Anschlußvorrichtung 11.1 des Vorhandenseins aller Medienleitungen in der zugehörigen Versorgungsleitung 17.

Die anderen Behandlungsinstrumente oder Handstücke 4b, 4c sind bezüglich der Anschlußvorrichtungen 3.1, 3a.1, 11.1, 13.1 entsprechend ausgebildet.

Alle erfindungsgemäßen Ausgestaltungen eignen sich sehr vorteilhaft sowohl für ärztliche oder zahnärztliche Behandlungsplätze, an denen Patienten behandelt werden, oder für medizintechnische, insbesondere zahntechnische Arbeitsplätze, wie sie in medizintechnischen oder zahntechnischen Laboratorien vorhanden sind, um z. B. Modelle und Prothesen des menschlichen oder tierischen Körpers zu bearbeiten.

Die Erfassungselemente der Erfassungsvorrichtung 6 können wie bereits beschrieben mit dem jeweiligen im Sinne der Anschlußvorrichtung 3 bzw. 3a oder 11 ausgebildeten Kupplungsteil 18, 18.1 zusammenwirken, so daß die jeweiligen Steuerungen 7 bzw. 12 die dem zugehörigen Handstück 4 jeweils zugehörigen Betriebsparameter steuert bzw. regelt. Dies gilt auch für das jeweils zugehörige Medium, dessen Leitung 15 aktiviert und gegebenenfalls gesperrt wird oder nicht.

Neben den oben beschriebenen Ansteuerungen unterschiedlicher Antriebssysteme mittels verschiedener Versorgungseinheiten 2 ist es ebenso möglich, an einem Steuergerät 1 mehrere Antriebssysteme mit gleichem physikalischen Prinzip, jedoch unterschiedlichen Anforderungen an die Versorgung anzuschließen. Beispielsweise können ein robuster (größerer) Antrieb für grobe Arbeiten, ein kleinerer, handlicher Antrieb mit geringerer Leistungsfähigkeit für filigrane Arbeiten und ein Antrieb für hohe Drehzahlen, zum Beispiel zum Ausarbeiten von Fissuren oder Keramikarbeiten, an ein solches erfindungsgemäßes Steuergerät 1 angeschlossen und von diesem betrieben werden.

Diese Antriebssysteme erfordern jeweils eigene Leistungsversorgungen bzw. bei elektrischen Antrieben gleichen Systems geänderte Teilelektroniken oder auch nur geänderte Einstellparameter.

Insgesamt können also im Steuergerät 1 verschiedene Versorgungseinheiten 2, Versorgungseinheiten 2 mit unterschiedlichen Teilbereichen oder Versorgungseinheiten 2 mit unterschiedlicher Zuordnung der Regelparameter vorhanden sein. Damit wird das Steuergerät 1 universell für alle Systeme frei wählbar verwendbar.

## Patentansprüche

1. Steuergerät mit mehreren zahnärztlichen, zahntechnischen oder feinwerktechnischen Behandlungsinstrumenten oder Handstücken (4) mit
- mehreren Behandlungsinstrumenten oder Handstücken (4) verschiedener oder gleicher physikalischer Antriebssysteme mit unterschiedlichen Betriebs- und/oder Steuerparametern und mit
- einer Anschlußvorrichtung (3, 3a, 11, 13; 3.1, 3a. 1, 11.1, 13.1) für die Behandlungsinstrumente oder Handstücke (4),
- wobei das Steuergerät (1) eine Erfassungsvorrichtung (6) für die Zuordnung der Behandlungsinstrumente oder Handstücke (4) aufweist,
**dadurch gekennzeichnet,**
**daß** die Erfassungsvorrichtung (6) externe Schaltelemente an einer Ablagevorrichtung für die Behandlungsinstrumente oder Handstücke (4) aufweist oder an den Behandlungsinstrumenten oder Handstücken (4) selbst aufweist.

2. Steuergerät nach Anspruch 1,
**dadurch gekennzeichnet,**
**daß** die Antriebssysteme mit verschiedenen zugeordneten Einstell- und/oder Betätigungselementen (9, 10) schalt- und/oder steuerbar sind.

3. Steuergerät nach Anspruch 1,
**dadurch gekennzeichnet,**
**daß** die Antriebssysteme mit den gleichen Einstell- und/oder Betätigungselementen (9, 10) schalt- und/oder steuerbar sind.

4. Steuergerät nach einem der vorherigen Ansprüche,
**dadurch gekennzeichnet,**
**daß** die Erfassungsvorrichtung (6) Schaltelemente an einer Anschlußvorrichtung (3, 3a, 11, 13; 3.1, 3a.1, 11.1, 13.1) aufweist.

5. Steuergerät nach einem der Ansprüche 1 bis 4,
**dadurch gekennzeichnet,**
**daß** die Zuordnung der Behandlungsinstrumente oder Handstücke (4) durch die Erfassungsvorrichtung (6) automatisch erfolgt.

6. Steuergerät nach Anspruch 5,
**dadurch gekennzeichnet,**
**daß** die Erfassungsvorrichtung (6) die Entnahme eines der Behandlungsinstrumente oder Handstücke (4) aus seiner Ablagevorrichtung mechanisch und/oder elektronisch und/oder opto-elektronisch und/oder magnetisch erfasst.

7. Steuergerät nach einem der Ansprüche 1 bis 6,
**dadurch gekennzeichnet,**
**daß** mehrere verschiedene Anschlußvorrichtungen (3, 3a, 11, 13; 3.1, 3a.1, 11.1, 13.1) am Behandlungsinstrument oder Handstück (4) für unterschiedliche Antriebssysteme vorhanden sind.

8. Steuergerät nach einem der Ansprüche 1 bis 7,
**dadurch gekennzeichnet,**
**daß** mehrere gleichartige Anschlußvorrichtungen (11; 11.1) am Behandlungsinstrument oder Handstück (4) für den wahlweisen Anschluß verschiedener Antriebssysteme vorhanden sind.

9. Steuergerät nach einem der Ansprüche 1 bis 8,
**dadurch gekennzeichnet,**
**daß** nur elektrische Antriebssysteme anschließbar sind.

10. Steuergerät nach einem der Ansprüche 1 bis 9,
**dadurch gekennzeichnet,**
**daß** nur pneumatische Antriebssysteme anschließbar sind.

11. Steuergerät nach einem der Ansprüche 1 bis 7,
**dadurch gekennzeichnet,**
**daß** elektrische und pneumatische Antriebssysteme anschließbar sind.

12. Steuergerät nach einem der Ansprüche 1 bis 11,
**dadurch gekennzeichnet,**
**daß** das Steuergerät (1) mit einer Anzeigevorrichtung (8) ausgestattet ist.

13. Steuergerät nach einem der Ansprüche 1 bis 12,
**dadurch gekennzeichnet,**
**daß** das Steuergerät (1) mit einem Anschluß für externe Anzeigevorrichtungen ausgestattet ist.

14. Steuergerät nach einem der Ansprüche 1 bis 13,
**dadurch gekennzeichnet,**
**daß** das Steuergerät (1) mit einem zweiten Steuergerät für die zentral gesteuerte Zufuhr weiterer Betriebsmittel kombinierbar ist.

15. Steuergerät nach einem der Ansprüche 1 bis 14,
**dadurch gekennzeichnet,**
**daß** die Anschlußvorrichtungen (3, 3a 11, 13; 3.1, 3a.1, 11.1, 13.1) Schnellkupplungen, insbesondere Steckkupplungen, sind.

16. Steuergerät nach einem der Ansprüche 1 bis 15,
**dadurch gekennzeichnet,**
**daß** im Bereich der Anschlußvorrichtungen (3, 3a, 11, 13; 3.1, 3a.1, 11.1, 13.1) Schnell- oder Steckkupplungen für zugehörige Mediumleitungen (15) vorgesehen sind, die beim Anschließen oder Lösen gekuppelt oder entkuppelt werden.

17. Steuergerät nach Anspruch 16,
**dadurch gekennzeichnet,**
**daß** die Schnell- oder Steckkupplungen beim Anschließen oder Lösen selbsttätig gekuppelt oder entkuppelt werden.

## Claims

1. Control apparatus having a plurality of dental, dental laboratory or precision mechanical treatment instruments or handpieces (4) having
- a plurality of treatment instruments or handpieces (4) of different or the same physical drive systems having different operating and/or control parameters and having
- a connection device (3, 3a, 11, 13; 3.1, 3a.1, 11.1, 13.1) for the treatment instruments or handpieces (4),
- whereby the control apparatus (1) has a detection device (6) for the allocation of the treatment instruments or handpieces (4),
**characterized in that** the detection device (6) has external switching elements on a repository device for the treatment instruments or handpieces (4) or on the treatment instruments or handpieces (4) themselves.

2. Control apparatus according to claim 1,
**characterized in that**,
the drive systems are switchable and/or controllable with different associated setting and/or actuating elements (9, 10).

3. Control apparatus according to claim 1,
**characterized in that**,
the drive systems are switchable and/or controllable with the same setting and/or actuation elements (9, 10).

4. Control apparatus according to any preceding claim,
**characterized in that**,
the detection device (6) has switching elements on a connection device (3, 3a, 11, 13; 3.1, 3a.1, 11.1, 13.1).

5. Control apparatus according to any of claims 1 to 4,
**characterized in that**,
the allocation of the treatment instruments or handpieces (4) is effected automatically by means of the detection device (6).

6. Control apparatus according to claim 5,
**characterized in that**,
the detection device (6) detects the removal of one of the treatment instruments or handpieces (4) out of its repository device mechanically and/or electronically and/or opto-electronically and/or magnetically.

7. Control apparatus according to any of claims 1 to 6,
**characterized in that**,
a plurality of different connection devices (3, 3a, 11, 13; 3.1, 3a.1, 11.1, 13.1) are present on the treatment instrument or handpiece (4) for different drive systems.

8. Control apparatus according to any of claims 1 to 7,
**characterized in that**,
a plurality of connection devices (11; 11.1) of the same kind are present on the treatment instrument or handpiece (4) for the selective connection of different driving systems.

9. Control apparatus according to any of claims 1 to 8,
**characterized in that**,
only electrical drive systems can be connected.

10. Control apparatus according to any of claims 1 to 9,
**characterized in that**,
only pneumatic drive systems can be connected.

11. Control apparatus according to any of claims 1 to 7,
**characterized in that**,
electric and pneumatic drive systems can be connected.

12. Control apparatus according to any of claims 1 to 11,
**characterized in that**,
the control apparatus (1) is equipped with a display device (8).

13. Control apparatus according to any of claims 1 to 12,
**characterized in that**,
the control apparatus (1) is equipped with a connection for external display devices.

14. Control apparatus according to any of claims 1 to 13,
**characterized in that**,
the control apparatus (1) is capable of combination with a second control apparatus for the centrally controlled delivery of further operating media.

15. Control apparatus according to any of claims 1 to 14,
**characterized in that**,
the connection devices (3, 3a, 11, 13; 3.1, 3a.1, 11.1, 13.1) are quick couplings, in particular plug-in couplings.

16. Control apparatus according to any of claims 1 to 15,
**characterized in that**,
in the region of the connection devices (3, 3a, 11, 13; 3.1, 3a.1, 11.1, 13.1) there are provided quick or plug-in couplings for associated media lines (15) which upon connection or release are coupled or decoupled.

17. Control apparatus according to claim 16,
**characterized in that**,
upon connection or release the quick or plug-in couplings are self-actingly coupled or decoupled.

## Revendications

1. Appareil de commande avec plusieurs instruments de traitement médico-dentaires, technico-dentaires ou de mécanique de précision ou avec des pièces à main (4) comportant :
- plusieurs instruments de traitement ou pièces à main (4) de systèmes d'entraînement physiques analogues ou variés avec des paramètres de fonctionnement et/ou de commande différents et avec
- un dispositif de connexion (3, 3a, 11, 13 ; 3.1, 3a 1 ; 11.1, 13.1) pour les instruments de traitement ou les pièces à main (4),
- l'appareil de commande (1) comportant un dispositif de saisie (6) pour l'affectation des instruments de traitement ou pièces à main (4),
**caractérisé en ce que** le dispositif de saisie (6) comporte des éléments de commutation extérieurs sur un dispositif de réception pour les instruments de traitement ou pièces à main (4) ou comporte ceux-ci sur les instruments de traitement ou les pièces à main proprement dits.

2. Appareil de commande selon la revendication 1, **caractérisé en ce que** les systèmes d'entraînement peuvent être commutés et/ou commandés par différents éléments de réglage et/ou d'actionnement affectés (9, 10).

3. Appareil de commande selon la revendication 1, **caractérisé en ce que** les systèmes d'entraînement peuvent être commutés et/ou commandés par les mêmes éléments de réglage et/ou d'actionnement affectés (9, 10).

4. Appareil de commande selon l'une quelconque des revendications précédentes, **caractérisé en ce que** le dispositif de saisie (6) comporte des éléments de commutation sur un dispositif de connexion (3, 3a, 11, 13 ; 3.1, 3a.1, 11.1, 13.1).

5. Appareil de commande selon l'une quelconque des revendications 1 à 4, **caractérisé en ce que** l'affectation des instruments de traitement ou des pièces à main (4) s'effectue automatiquement par le dispositif de saisie (6).

6. Appareil de commande selon la revendication 5, **caractérisé en ce que** le dispositif de saisie (6) détecte l'enlèvement de l'un des instruments de traitement ou pièces à main (4) de son dispositif de réception de façon mécanique et/ou électronique et/ou opto-électronique et/ou magnétique.

7. Appareil de commande selon l'une quelconque des revendications 1 à 6, **caractérisé en ce que** plusieurs dispositifs de connexion différents (3, 3a, 11, 13 ; 3.1, 3a.1, 11.1, 13.1) sont prévus sur l'instrument de traitement ou pièce à main (4) pour différents systèmes d'entraînement.

8. Appareil de commande selon l'une quelconque des revendications 1 à 7, **caractérisé en ce que** plusieurs dispositifs de connexion analogues (11 ; 11.1) sont prévus sur l'instrument de traitement ou pièce à main (4) pour la connexion sélective de différents systèmes d'entraînement.

9. Appareil de commande selon l'une quelconque des revendications 1 à 8, **caractérisé en ce que** seuls peuvent être connectés des systèmes d'entraînement électriques.

10. Appareil de commande selon l'une quelconque des revendications 1 à 9, **caractérisé en ce que** seuls peuvent être connectés des systèmes d'entraînement pneumatiques.

11. Appareil de commande selon l'une quelconque des revendications 1 à 7, **caractérisé en ce que** des systèmes d'entraînement électriques et pneumatiques peuvent être connectés.

12. Appareil de commande selon l'une quelconque des revendications 1 à 11, **caractérisé en ce que** l'appareil de commande (1) est équipé d'un dispositif d'affichage (8).

13. Appareil de commande selon l'une quelconque des revendications 1 à 12, **caractérisé en ce que** l'appareil de commande (1) est équipé d'une connexion pour des dispositifs d'affichage extérieurs.

14. Appareil de commande selon l'une quelconque des revendications 1 à 13, **caractérisé en ce que** l'appareil de commande (51) peut être combiné avec un deuxième appareil de commande pour l'amenée à une commande centralisée d'autres moyens de fonctionnement.

15. Appareil de commande selon l'une quelconque des revendications 1 à 14, **caractérisé en ce que** les dispositifs de connexion (3, 3a 11, 13 ; 3.1, 3a.1, 11.1, 13.1) sont des accouplements rapides, en particulier des accouplements enfichables.

16. Appareil de commande selon l'une quelconque des revendications 1 à 15, **caractérisé en ce que** dans la zone des dispositifs de connexion (3, 3a 11, 13 ; 3.1, 3a.1, 11.1, 13.1) sont prévus des accouplements rapides ou enfichables pour des conduites d'agents adéquates (15), qui sont accouplées ou désaccouplées lors de la connexion ou de la déconnexion.

17. Appareil de commande selon la revendication 16, **caractérisé en ce que** les accouplements rapides ou enfichables sont accouplés et désaccouplés automatiquement lors de la connexion et de déconnexion.
